# EUROPEAN PATENT SPECIFICATION

(11) **EP 0 317 181 B1**
(45) Date of publication and mention of the grant of the patent: **19.01.1994**
(21) Application number: 88310624.7
(22) Date of filing: 10.11.1988
(51) Int. Cl.: G08G 1/09

(54) **Road vehicle route selection and guidance systems**
Zielführungs- und Streckenauswahlsysteme für Kraftfahrzeuge
Systèmes de guidage et de sélection d'itinéraire pour véhicule

(30) Priority: 10.11.1987 GB 8726312
(43) Date of publication of application: 24.05.1989
(73) Proprietor: Siemens Plessey Controls Limited, Poole, Dorset BH17 7ER (GB)
(72) Inventor: Tarrant, David William, Corfe Mullen Dorset. BH21 3TW (GB)
(74) Representative: Nicholson, Ronald

(56) References cited:
- DE-A- 3 022 761
- FUNKSCHAU, vol. 28, no. 22, October 1986, pages 99-102; "Auto-Navigation: Elektronische Lotsen"

## Description

This invention relates to road vehicle route selection and guidance systems.

Such road vehicle route selection and guidance systems usually comprise a computer including VDU and keyboard within the vehicle so that at the beginning of a journey, the driver keys into the computer his intended destination and the computer computes from the information regarding the road network stored within the computer or transmitted to the computer from an external system the route which should be taken by the vehicle and displays appropriate instructions on the VDU at intervals during the journey. An example of such a system is disclosed in the publication Funkschau Vol 28, No 22, October 1986, pg 99-102, entitled Auto-Navigation:Elektronische Lotsen.

Known road vehicle route selection and guidance systems fall into two main categories, namely autonomous systems and infrastructure based systems. With autonomous systems, a mass storage device such as a compact disc located in the vehicle carries a complete detailed road map in digital form. Thus for example a 500 Mbyte compact disc can carry a detailed road map of the whole of the UK region having a resolution down to street level. The computer within the vehicle works out a proposed route from the destination keyed in by the driver, and with the aid of an odometer and electronic magnetic compass carried by the vehicle, the route taken by the vehicle is automatically tracked, and decisions are made as to the direction the vehicle should take at the next intersection. The problem with such a device are that the mass storage device is a relatively expensive item for each vehicle and that furthermore it is not possible to update the stored map at frequent intervals to take account of roadworks, accidents, ice and snow, etc.

In infrastructure based systems, individual vehicles do not carry mass storage devices, merely an on-board computer. A central computer station is provided for the road network which communicates via a data communications network to beacons provided at intervals over the road network, as at traffic lights, etc. These beacons carry infrared transceivers which enable them to communicate with infrared transceivers mounted within each vehicle using the system.

The central computer usually caries a complete map of primary roads (motor ways, A class road) of the whole area served by the system. The central computer computes at frequent intervals a set of routeing trees which comprise optimum routes between route nodes (e.g. intersection of two or more roads) in the system. These routeing trees are distributed via the data network and appropriate sets of these trees stored in the individual beacons. The beacons broadcast as information their respective set of routeing trees to passing vehicles, from which the on board computer of the vehicle selects the appropriate route to take to enable the drive to navigate to the next beacon en route, when a new routeing tree may be provided. The vehicle computer will select the route from the routeing tree set, the intended destination keyed in by the driver, the direction of the vehicle as indicated by the electronic compass and the distance travelled by the vehicle as indicated by the odometer. There may be large number of nodes between adjacent beacons at which decisions are required.

Advantages of such a system are that the central computer can acquire and use up-to-date information regarding roadworks, volume of traffic, icy conditions, accidents, etc. so that it can revise routeing tree calculations at frequent intervals, say every five minutes. Further since the computer in each vehicle has no need for mass storage, this represents a major cost reduction in each vehicle unit.

A major disadvantage of such a system is that whilst it is efficient at guiding vehicles over trunk road systems, it is inefficient at local guidance, say in a town on a street-by-street basis. This is because the beacons are sparsely distributed and it is impractical in terms of calculating time to calculate routeing trees for more than the nodes of the primary route system. The number of nodes required to describe the complete road system down to local streets, would result in impractically long calculations.

The present invention provides a road vehicle route selection and guidance system which combines the advantage of the two systems described above by employing a road map data base which can be rapidly updated and which in addition can provide guidance on a local basis without requiring excess computing or storage capabilities within each vehicle.

According to the present invention there is provided a road vehicle route selection and guidance system, comprising a network of beacons distributed at selected points over a designated road system, each beacon including a transmitter for transmitting to passing vehicles information regarding primary routes of the road system and a detailed road map in digital form of an area local to the beacon, a plurality of vehicles each including a receiver for receiving information from beacons en route, a memory store coupled to store the received information, a computing means which includes a route finding algorithm and means for providing positional information of the vehicle, characterised in that in use of the system the computing means of the vehicle is operative to select an appropriate route over the primary roads of the road system from the received information, and when the vehicle approaches its destination, the vehicle computing means is operative to access the received local area map and to provide guidance information to the intended destination by means of the local area map, the route finding algorithm and positional information of the vehicle.

Thus in accordance with the invention, if a driver of a vehicle sets out for a particular destination, he will key in the destination to the on board computer system. When the vehicle approaches the first beacon en route, for example located on a set of traffic lights, the beacon will transmit a set of routeing trees to the vehicle which will enable the vehicle to compute appropriate directions to the next beacon in an optimum route to the intended destination. Normally such beacons will be located on major roads and will operate to direct the vehicle over the major road network. When the vehicle approaches its destination, the on board computer will recognise that the digitised detailed local area map transmitted by the beacon contains the destination. Thereafter the on board computer of the vehicle will compute from the map and positional information provided by the vehicle a set of instructions which will enable the driver to reach his destination, for example the car park of a hotel or industrial site.

It will be noted that a major advantage of this system arises if a vehicle driver takes a wrong route, since the vehicle computer may immediately access the associated local area map and prepare revised instructions from this map until the driver regains the correct route. This can be done with known route-finding algorithms.

The detailed road map may be stored in each beacon in ROM and be updated as necessary by physical replacement of a ROM chip. Alternatively the detailed road map may be stored in RAM and updated at intervals, say twice yearly, by data transmissions from the central computer.

As stated above, the central computer transmits sets of routeing trees to the beacons. In alternative configurations the central computer may transmit the primary route map or selected parts, with primary roads and nodes to the beacons. The beacons thereupon broadcast the primary route map, and the vehicle computer interprets the route map to select a route.

Although in practice it will normally be necessary for the beacons simply to broadcast information, in certain situations it may be possible for vehicles and beacons to operate in a duplex mode with certain information processing taking place in the beacon. For example the vehicle computer may request the beacon to transmit only selected parts of its information store, eg. only the local area map or only selected parts of a primary route map.

It may be possible in certain circumstances to receive additional broadcast information, for example information transmitted in sidebands of FM audio broadcasts, (Cf. currently available RDS systems) and to use this information to modify the route information contained in the on-board computer. For example, information may be broadcast to give a visual display on, say an LCD screen, that a certain primary route is blocked. A driver may key this information into the onboard computer to remove the blocked route from consideration for route finding. Alternatively if the information is appropriately formatted and encoded, it may be entered directly into the computer from the FM receiver.

The means providing positional information of the vehicle may include an electronic compass and odometer carried by the vehicle. As an alternative to an odometer, a vehicle wheel speed sensor may be provided from which the distance travelled by the vehicle may be calculated.

A preferred embodiment of the invention will now be described with reference to the accompanying drawings, wherein:-
Figure 1 is a schematic view of the road vehicle route selection and guidance system according to the invention;
Figure 2 is a schematic view in more detail of a vehicle forming part of the system; and
Figure 3 is a block diagram of part of the electrical circuitry associated with a road vehicle and beacon of the system of Figure 1.

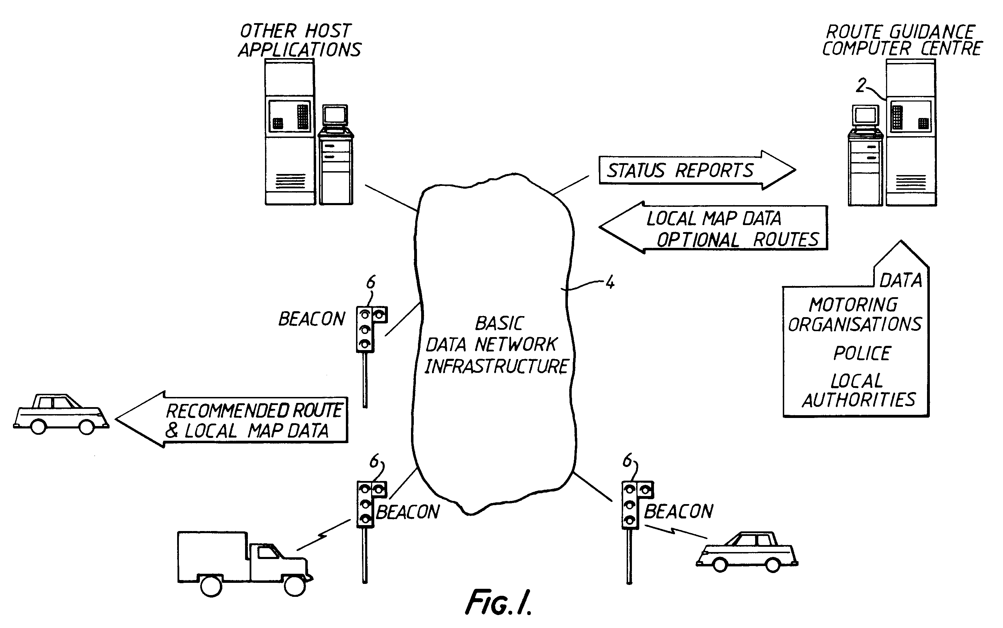

Referring now to the drawings, Figure 1 shows a schematic view of the road vehicle route selection and guidance system as comprising a central computer centre 2 comprising a large computer system with associated storage capabilities and storing data concerning the road system for a particular area, for example, the United Kingdom in great detail, down to a local area resolution on a street-by-street basis. The computer centre continuously receives data by telecommunications links from motoring organisations, Police and Local Authorities concerning recent incidents likely to affect the road system, for example, road works, road accidents, or icy or fog conditions which make certain routes impractical. Thus the information stored by the computer centre can be updated on a very recent basis. The computer centre operates to compute a set of routeing trees between nodes (normally road intersections) for the primary routes of the road system, namely Motorways, A routes and some principal B routes, so as to provide optimum routes between the nodes for the regions around every beacon in the system (about 15000) to adjacent nodes in the system. The routeing trees define routes in terms of possible routes from a first selected node to a group of nearby nodes, and then possible routes from each node of this group to a second group of next adjacent nodes, etc, etc. These routeing trees are recalculated every five minutes or so to take account of up to date information.

The beacons are distributed at relatively infrequent intervals over the road system, and there are far fewer beacons than nodes. It is therefore necessary for the computer centre to develop route instructions so as to provide appropriate directions for the vehicle at each node to enable him to navigate to the next node. The computer centre communicates with the beacons by a data telecommunications network 4 which may be any convenient data network, for example the public telecommunication system, satellite links, or fibre optical links. The beacons of the system are indicated as 6 and are located on major roads, for example, at traffic intersections and may physically be disposed on a set of traffic lights.

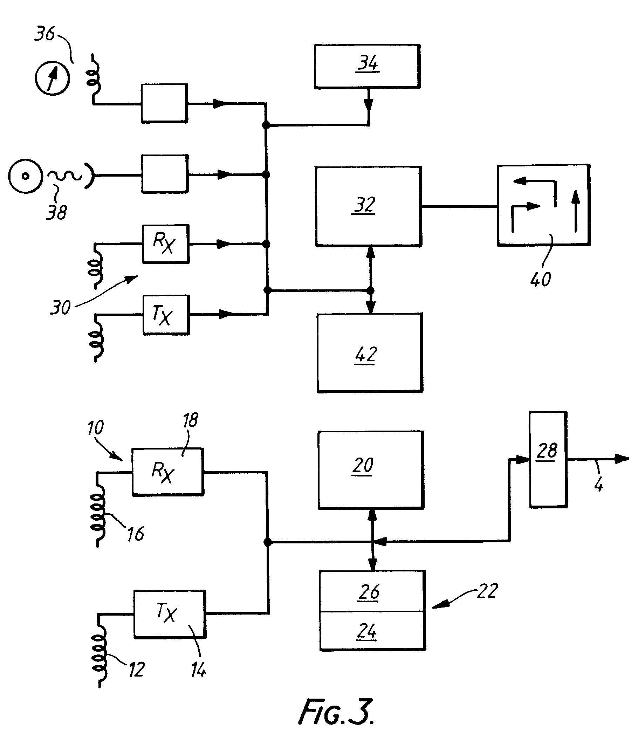

Each beacon 6 comprises as is shown in more detail in Figure 3 a transceiver 10 which emits electro-magnetic radiation, preferably in the infra red range, usually about 950 nanometres. Being located at a set of traffic lights the transceiver will be constructed as a unit to be bolted on to the traffic lights, as though it were a further light of the traffic light system. The transceiver will be directed towards oncoming motorists, but will be transmitting non-visible infra red radiation. The transceiver comprises a transmitting element 12 coupled to a transmitter circuit 14 which may be constructed as an integrated circuit and which transmits to element 12 digital modulation signals for pulse code modulation of the infra red radiation in a suitable modulation form, eg. Manchester code or NRZ code. A receiving element 16 sensitive to infra red radiation transmitted by an oncoming vehicle is coupled to a receiver 18 which demodulates the information in the incoming signal and transmits the information to a microprocessor 20 which processes the information. Microprocessor 20 is coupled to a memory store 22 which has a first area 24 storing a set of routeing trees and a second area 26 storing a detailed map of the local area. The area of the local map mmay vary between a small area, 1km. square for high density housing areas in towns to large areas ,400 km. square, in rural areas. A gateway 28 interconnects microprocessor 20 with data communication network 4.

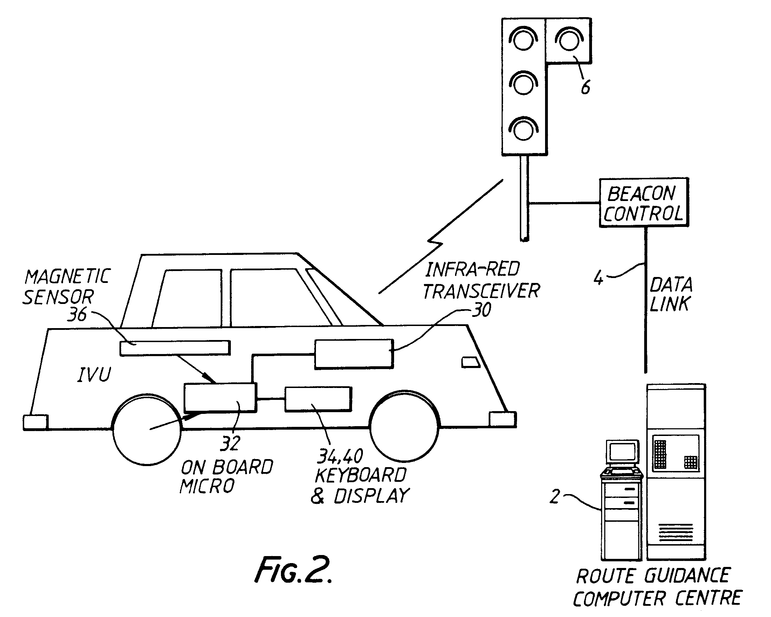

The vehicle has an infra red transceiver 30 (Figures 2 and 3) of identical construction to tranceiver 10 and similar parts will be denoted by similar reference numerals. Transceiver 30 is mounted behind the drivers windscreen for receiving the information transmitted by the beacon 6. The infra red transceiver 30 is coupled to a micro-processor system 32 which also receives data input signals from a keyboard 34, an electro-magnetic compass 36 and a vehicle wheel speed sensor 38. The micro-processor system 32 is operative to provide appropriate display signals to a VDU unit 40. In addition, the microprocessor 20 stores in ROM a route finding algorithm for finding an appropriate route from the local area detailed map. The micro-processor system, referring to Figure 3 possess a RAM store 42 which comprises integrated circuit chips defining a random access memory of a size between 10 Kbytes and 250 Kbytes, preferably 32 Kbytes.

For simplicity of installation, the various elements within the vehicle are preferably constructed as a single unit to be mounted on the vehicle dashboard, and to be connected to the vehicle battery supply. The electronic compass is preferably of a type described in our copending British Patent application 8729415 (F20267). The vehicle speed sensor is of a type described in our copending British Patent application 8818136 (F20268) and relies on detection of magnetic field anomalies in a vehicle road wheel of conventional construction. The VDU unit 40 will have a small screen for displaying arrow signs as to the direction the driver should take, road number designations, street names and other vital and easily readable information.

Communications take place between transceivers 10 and 30 in a suitable HDLC format which provides for start codes, synchronisation codes, error recovery prodecures and transmittal of data in packets of predetermined length.

Thus in operation the central computing system is constantly operative to generate sets of routeing trees for each beacon 6 of the system based on up to date information. These routeing trees are transmitted across the communications network 4 to each beacon 6 at appropriate intervals and stored as at 24. In addition local area maps are transmitted to each beacon and are stored in a separate section of memory 26. Having received this information, each beacon 6 continuously broadcasts this information as a series of data packets.

When a vehicle driver wishes to access the system he follows the following procedure. He types in via the keyboard in a predetermined protocol the intended destination of the vehicle setting out on his journey. When the vehicle approaches the first beacon en route located at a traffic light system or elsewhere, the transceiver within the vehicle receives the information broadcast by the beacon as a series of packets which are assembled within computer 32 and stored in RAM 22. Thus the information stored represents a set of routeing trees from the beacon and a detailed local area map. The vehicle computer 32 is operative to assimilate the destination to the routeing trees stored within the RAM 42 and to select from these routeing trees the optimum route for the vehicle.

The selection of an appropriate route from the trees is a well known procedure and will not be described in greater detail. Having selected a route and knowing the position of the beacon in relation to the first node of the chosen route, the vehicle computer will monitor the vehicle direction by compass 36 and the vehicle distance travelled via speedometer 38. This will enable the computer to assess when the vehicle is approaching the first node en route, at which time it provides appropriate indications on the display 40 in terms of direction arrows and route numbers to enable the vehicle to take the correct exit from the node. It may be necessary for the beacon to transmit information in addition to the routeing tree to enable a vehicle to proceed between certain nodes, and this will be taken into account when the vehicle computer provides appropriate directions.

Thus the vehicle will proceed from node to node until in the vicinity of the next beacon en route, when it will receive updated information which may comprise revised routeing trees, directions and information specific to internodal routes adjacent the beacon and a new local area map. The vehicle will be directed past the beacon and through the next node using information from the previous beacon in view of the length of time taken for this vehicle to absorb information from a beacon.

It will be understood that the routeing trees stored by each beacon relate to the nodes within a predetermined zone around the beacon, say 25 km., and thus as the vehicle absorbs information from the next beacon en route, this will provide the instructions for a new zone enabling the vehicle to proceed on its desired route.

When the vehicle approaches its intended destination, the vehicle microprocessor will recognise that the local area map transmitted to it contains the intended destination, and will thereupon not rely on the routeing trees but will by means of the high resolution local area map, produce appropriate directions for the vehicle to proceed on a street-by-street basis.

The microprocessor system 32 of the vehicle contains in resident ROM a route finding algorithm for interpreting the digitally coded local area map. Such algorithms operate by determining the shortest path between different points in a transportation system by a process commonly known as "building trees". There are several standard tree-building algorithms in general use such as those due to Moore (1957), Dijkstra (1959) and D'Esopo (1960): see Van Vleit, D. "Improved Shortest Path Algorithms For Transport Networks", Transportation Research, Vol. 12, p. 7, 1978. Algorithms such as these can easily be coded to run efficiently on inexpensive microcomputers suitable for use in in-vehicle electronic navigation equipment.

It will be noted a major advantage of this system is that should a driver make a mistake en route by not following computer instructions, the vehicle computer will be able to access the local area map and produce revised instructions from its route finding algorithm in order for the driver either to regain the correct route at a suitable point or alternatively to direct the driver to the next beacon en route, whence a new routeing tree will be received.

Thus to summarise the present desclosure, previously described vehicle route guidance systems fall into two broad categories: Autonomous Systems; and Infrastructure or Beacon based systems. Autonomous Systems make use of a mass storage device located in the vehicle to carry a complete detailed digital road map of the whole of the served region (e.g. the U.K.). Compact disk (CD) technology may be used with a data capacity of up to 500 Mega Bytes for storing maps. The optimum route from the vehicle starting point to the desired destination is calculated by an associated microcomputer. Also carried in the vehicle is a Dead Reckoning Navigational Facility based on an electronic magnetic compass. Thus, in principle, the vehicle is capable of finding its way to any desired destination without reference to any other source of information.

Infrastructure based systems differ significantly from Autonomous systems in that they do not carry a complete digital may in the vehicle, nor do they compute optimum routes in the vehicle. The fact that Infrastructure based systems do not carry a complete map, eliminates any requirement for a mass stroage device in the vehicle. Infrastructure based systems maintain periodic contact between the vehicle and a central computer by means of a network of roadside beacon units. The beacon units communicate with the vehicle unit by means of electromagnetic waves such as radio, microwave or infrared. The central computer stores a digital map of the whole of the served region (e.g. the U.K.) in its database. The central computer also calculates optimum routes from every node in the network to every other node in the network. The results of these calculations are known as "routeing trees". These routeing trees are distributed to the beacons by some means such as a data network. Once a beacon has been loaded with its set of routeing trees, it becomes an "electronic signpost" which is capable of advising passing vehicles which is the correct exit to take from the intersection or intersections served by that beacon, in order to reach any destination in the region served by the system (e.g. the U.K.) by the optimum route.

At any one time, the vehicle unit holds sufficient information received from the last beacon encountered in order to navigate along a section of the prescribed route towards its required destination. Beacon density and location is chosen so that route guidance instructions received from one beacon are sufficiently to guide the vehicle along its optimum route as far as the next beacon and so on. The vehicle unit does not calculate optimum routes, it merely selects from a list of precalculated routes transmitted to it by the beacon. The vehicle is also equipped with a Dead Reckoning Navigational Facility based on an electronic magnetic compass.

Since the Autonomous system does not require an infrastructure of beacons, it has the advantage that there is no cost associated with the provision of such an infrastructure. A further advantage of the Autonomous System based on Compact Disk Technology is that sufficient data storage capacity is available to carry an extremely detailed map of the served region (e.g. every street in the U.K.). This permits the resolution of the route guidance facility to be very fine (e.g. the precise building or car park that it is desired to reach). A further advantage of this type of system is that the penalty for failing to follow an advised direction is small. In this case the system merely indicates to the driver, the best route from whereever the vehicle happens to be at the time. Also, since digital map information is stored in the vehicle, it is possible to display the map or sections of the map to the driver should he so desire.

The major disadvantage of the Autonomous System is that it is working with out-of-date map information. the data is at least as old as the date of publication of the compact disk on which the map is stored. Thus the Autonomous System has little scope for adapting routes in response to dynamic conditions such as roadworks, peak hour congestion, accidents etc.. A further disadvantage of the Autonomous System is that the Vehicle Units must incorporate a mass storage device such as a Compact Disk Reader which increases the cost.

As regards Infrastructure based systems, this advantage is that the route guidance information presented to the driver can be based on up-to-date information. In principle, it is possible for the central computer to gather information relating to current road conditions on an ongoing basis. Furthermore, it can re-calculate the routeing trees periodically (e.g. every 5 mins) and update the information held by the beacons on a regular basis. Thus it is possible to guide the vehicle around trouble spots if a suitable alternative route exists. It is convenient to refer to this attribute of the Infrastructure based system as "real time capability". A further advantage of the Infrastructure based system is that hazard warning information (e.g. Fog!, Ice! Accident!) can also be communicated to the driver from the central computer. The Infrastructure based system Vehicle Unit, has a cost advantage over the Autonomous system since it has no requirement for a mass storage device.

A major disadvantage of the Infrastructure based system is its poor local guidance capability. The local guidance performance is limited by the time taken by the central computer to perform the routeing tree calculations for very large networks. The processing time for generating a complete set of routeing trees for a 5,000 node network maybe in excess of 600 seconds. (A 5,000 node network approximates to the major road network of the U.K.). Thus it can be seen that the task of re-calculating the routeing trees every 5 mins is already formidable, even for a relatively coarse network. If one estimates the nature of the network necessary to provide guidance to a particular building or car park in the U.K. (i.e. to within 0,1 Km) then the number of nodes required would be of the order of 20,000,000. In this case, it is not feasible to re-calculate routeing trees at frequent intervals by conventional means.

With the present invention, the real time capability of the infrastructure based system can be achieved whilst at the same time preserving the high resolution local guidance capability associated with the Autonomous system. the method by which this is accomplished is based on an approach which utilizes a central computer and beacon network similar to that required for the infrastructure based system previously referred to, in conjunction with a Vehicle Unit that performs part of the optimum route calculation.

In the present invention, the central computer holds a digital map of the major road network and computes optimum routes on an inter urban basis. Since the number of nodes required to describe the major road network of a typical served region (e.g. the U.K.) is of the order of 5,000, it is possible to re-calculate the routeing trees frequently (every 5 to 10 mins). The central computer (or local area computer) holds digital maps of high resolution on a local area basis (e.g. Bournemouth). Copies of sections of these local area digital maps are loaded to the appropriate beacons in addition to the interurban routeing trees which have been calculated by the central computer.

Normally, during the initial phases of an interurban journey, the vehicle will receive pre-calculated interurban guidance instructions from the beacons that it passes. On reaching the proximity of its desired destination (e.g. within 1 Km), the vehicle unit will receive a complete digital map of the local area from the last beacon encountered as the destination is approached. Once the local area digital map has been received by the vehicle unit, the vehicle unit computer computes the optimum route from the then current position to the final destination. Since the vehicle unit only needs to store a high resolution digital map relating to a comparatively small area (e.g. 1 Km square) there is no requirement for a mass storage device to be incorporated as part of the vehicle unit. Furthermore since only a limited amount of data needs to be passed from the beacon to the vehicle units, there is ample time to accomplish this data transfer whilst the vehicle unit is within range of the beacon unit.

This technique can also be applied to overcome the limitation of the previously described Infrastructure based system in the case where the driver inadvertently fails to follow a direction. If the vehicle unit always picks up the local guidance information as it passes each beacon as well as inter-urban routeing information, then the vehicle unit always has sufficient detailed information regarding its immediate neighbourhood to enable it to accommodate driver errors in a graceful manner.

## Claims

1. A road vehicle route selection and guidance system, comprising a network of beacons (6) distributed at selected points over a designated road system, each beacon (6) including a transmitter (14) for transmitting to passing vehicles information regarding primary routes of the road system and a detailed road map in digital form of an area local to the beacon, a plurality of vehicles each including a receiver (30) for receiving information from beacons (6) en route, a memory store (42) coupled to store the received information, a computing means (32) which includes a route finding algorithm and means for providing positional information of the vehicle, characterised in that in use of the system the computing means (32) of the vehicle is operative to select an appropriate route over the primary roads of the road system from the received information, and when the vehicle approaches its destination, the vehicle computing means (32) is operative to access the received local area map and to provide guidance information to the intended destination by means of the local area map, the route finding algorithm and positional information of the vehicle.

2. A system as claimed in claim 1, wherein said network of beacons (6) distributed at selected points over a designated road system are connected by a data communications network (4) to a computer system (2), the computer system (2) being operative to calculate sets of routeing trees for optimum routes between nodes of the road system and to transmit to each beacon (6) or selected beacons a respective set of routeing trees, each such beacon (6) being operative to store the respective set of routing trees and in addition a detailed road map in digital form of the area local to the beacon.

3. A system as claimed in claim 2, wherein the computer system (2) has stored therein a road system map in digital form for the area served by the system and being operative to calculate sets of routeing trees from the road system map.

4. A system according to claim 3, including means for continuously updating the map stored by the computer system.

5. A system according to any preceding claim, wherein the transmitter and receivers of the beacons (6) and vehicles each comprise infra-red transceivers means (12, 16) respectively, for pcm modulated infra-red radiation.

6. A system according to any preceding claim wherein the memory store (42) of each vehicle computing means (32) comprises a random access memory in integrated circuit form.

7. A system according to any preceding claim wherein each vehicle includes an electronic compass means (36).

8. A system according to any preceding claim, wherein upon the computing means (32) detecting the vehicle having taken a wrong route, the computing means (32) is operative to access the local area map to provide guidance information to return the vehicle to the correct route or to the next beacon (6) en route.

9. A system according to claim 1, wherein at least one vehicle includes an FM receiver for receiving encoded information in a sideband of an FM broadcast signal relating to the primary route system, the computing means (32) including means for amending route information contained therein on the basis of this information.

## Patentansprüche

1. Zielführungs- und Streckenauswahlsystem für Kraftfahrzeuge mit einem Netz aus Baken (6), die an ausgewählten Punkten über ein festgelegtes Straßensystem verteilt sind, wobei jede Bake (6) einen Sender (14) umfaßt, um vorbeifahrenden Fahrzeugen Informationen zu Hauptstrecken des Straßensystems sowie eine detaillierte Straßenkarte eines lokalen Bereichs um die Bake in digitaler Form zu senden, und mit einer Anzahl von Fahrzeugen, von denen jedes einen Empfänger (30) zum Empfang von Informationen von Baken (6) an der Strecke, einen Speicher (42), der zum Speichern der empfangenen Informationen angekoppelt ist, eine Recheneinrichtung (32), die einen Streckenauffindalgorithmus enthält, sowie Mittel zur Bereitstellung von Positionsinformationen des Fahrzeugs aufweist, dadurch gekennzeichnet, daß die Recheneinrichtung (32) des Fahrzeugs bei der Verwendung des Systems so arbeitet, daß sie aus den empfangenen Informationen über die Hauptstraßen des Straßensystems eine geeignete Strecke auswählt, und daß dann, wenn sich das Fahrzeug seinem Zielort nähert, die Fahrzeugrecheneinheit (32) so arbeitet, daß sie auf die Landkarte des lokalen Gebiets zugreift und mittels der Landkarte des lokalen Gebiets, des Streckenauffindungsalgorithmus und der Positionsinformationen des Fahrzeugs Zielführungsinformationen bis zu dem beabsichtigten Zielort bereitstellt.

2. System nach Anspruch 1, bei welchem das Netz aus an ausgewählten Punkten über ein festgelegtes Straßensystem verteilte Baken (6) durch ein Datenübertragungsnetzwerk (4) mit einem Rechnersystem (2) verbunden ist, wobei das Rechnersystem (2) so arbeitet, daß es Sätze von Leitwegbäumen für optimale Strecken zwischen Knotenpunkten des Straßensystems berechnet und zu jeder Bake (6) oder zu ausgewählten Baken jeweils einen Satz von Leitwegbäumen sendet, wobei jede dieser Baken (6) so arbeitet, daß sie den jeweiligen Satz von Leitwegbäumen und zusätzlich eine detaillierte Straßenkarte des lokalen Gebietes um die Bake in digitaler Form speichert.

3. System nach Anspruch 2, bei welchem das Rechnersystem (2) für das von dem System bediente Gebiet in digitaler Form eine Straßensystemkarte gespeichert hat und so arbeitet, daß es aus der Straßensystemkarte Sätze von Leitwegbäumen berechnet.

4. System nach Anspruch 3, mit Mitteln zur kontinuierlichen Aktualisierung der von dem Rechnersystem gespeicherten Karte.

5. System nach einem der vorhergehenden Ansprüche, bei welchem die Sender und Empfänger der Baken (6) und der Fahrzeuge jeweils Infrarot-Sende-Empfangsmittel (12, 16) für PCM-modulierte Infrarotstrahlung aufweisen.

6. System nach einem der vorhergehenden Ansprüche, bei welchem der Speicher (42) jeder Fahrzeugrecheneinrichtung (32) einen Speicher mit wahlfreiem Zugriff in Form einer integrierten Schaltung aufweist.

7. System nach einem der vorhergehenden Ansprüche, bei welchem jedes Fahrzeug eine elektronische Kompaßeinrichtung (36) umfaßt.

8. System nach einem der vorhergehenden Ansprüche, bei welchem dann, wenn die Recheneinrichtung (32) erfaßt, daß das Fahrzeug eine falsche Strecke genommen hat, die Recheneinrichtung (32) so arbeitet, daß sie auf die Karte des lokalen Gebiets zugreift, um Zielführungsinformationen bereitzustellen, damit das Fahrzeug auf die richtige Strecke oder zu der nächsten Bake (6) an der Strecke zurückkehrt.

9. System nach Anspruch 1, bei welchem wenigstens ein Fahrzeug einen FM-Empfänger zum Empfang von codierten Informationen in einem Seitenband eines FM-Radiosignals aufweist, die sich auf das Hauptstreckensytem beziehen, wobei die Recheneinrichtung (32) Mittel umfaßt, um die darin enthaltenen Streckeninformationen auf der Grundlage dieser Informationen abzuändern.

## Revendications

1. Système de guidage et de sélection de route pour véhicule routier, comprenant un réseau de balises (6) distribuées à des points choisis dans un système routier désigné, chaque balise (6) comprenant une émetteur (14) destiné à émettre vers les véhicules qui passent des informations relatives aux routes principales du système routier et une carte routière détaillée sous forme numérique d'une région locale de la balise, plusieurs véhicules comprenant chacun un récepteur (30) destiné à recevoir des informations des balises (6) en cours de route, une mémoire (42) couplée afin qu'elle contienne les informations reçues, un dispositif de calcul (32) qui contient un algorithme de détermination de route et un dispositif donnant des informations de position du véhicule, caractérisé en ce que, pendant l'utilisation du système, le dispositif de calcul (32) du véhicule assure la sélection d'une route convenable parmi les routes principales du système routier à partir des informations reçues et, lorsque le véhicule se rapproche de sa destination, le dispositif (32) de calcul du véhicule a accès à la carte locale reçue et donne des informations de guidage vers la destination prévue à l'aide de la carte locale, de l'algorithme de détermination de route et des informations de position du véhicule.

2. Système selon la revendication 1, dans lequel le réseau de balises (6) distribuées à des points choisis dans un système routier désigné est raccordé par un réseau (4) de communication de données à un système à ordinateur (2), celui-ci (2) assurant le calcul d'ensemble d'arbres d'acheminement correspondant à des routes optimales entre les noeuds du système routier et qui transmet à chaque balise (6) ou à des balises choisies un ensemble respectif d'arbres d'acheminement, chaque balise (6) étant destinée à mémoriser un ensemble respectif d'arbres d'acheminement et, en outre, une carte routière détaillée sous forme numérique relative à la zone locale à la balise.

3. Système selon la revendication 2, dans lequel le système à ordinateur (2) contient une carte du système routier sous forme numérique pour la région desservie par le système et assure le calcul d'ensembles d'arbres d'acheminement pour la carte du système routier.

4. Système selon la revendication 3, comprenant un dispositif de remise à jour constante de la carte conservée par le système à ordinateur.

5. Système selon l'une quelconque des revendications précédentes, dans lequel l'émetteur et les récepteurs des balises (6) et des véhicules comportent chacun des émetteurs-récepteurs infrarouges (12, 16) d'un rayonnement infrarouge modulé par impulsions et codage.

6. Système selon l'une quelconque des revendications précédentes, dans lequel la mémoire (42) de chaque dispositif (32) de calcul de véhicule comprend une mémoire à accès direct sous forme d'un circuit intégré.

7. Système selon l'une quelconque des revendications précédentes, dans lequel chaque véhicule comprend un dispositif à compas électronique (36).

8. Système selon l'une quelconque des revendications précédentes, dans lequel, après détection par le dispositif de calcul (32) du fait que le véhicule a suivi une route erronée, le dispositif de calcul (32) assure l'accès à la carte locale pour donner des informations de guidage assurant le retour du véhicule sur la route convenable ou à la balise suivante (6) de la route.

9. Système selon la revendication 1, dans lequel un véhicule au moins comporte un récepteur à modulation de fréquence destiné à recevoir des informations codées dans une bande latérale d'un signal d'émission modulé en fréquence relatif au système des routes principales, le dispositif de calcul (32) comprenant un dispositif destiné à modifier l'information de routes contenue en fonction de cette information.
